# EUROPEAN PATENT APPLICATION

(11) **EP 2 645 337 A1**
(43) Date of publication of application: **02.10.2013**
(21) Application number: 12161310.3
(22) Date of filing: 26.03.2012
(51) Int. Cl.: G07C 13/00

(54) **Method and system for accessing an electronic election for online voting**

(71) Applicant: Falzitti, Danilo, 67100 Civita di Bagno (AQ) (IT)
(72) Inventor: Falzitti, Danilo, 67100 Civita di Bagno (AQ) (IT)
(74) Representative: Dini, Roberto

(57) **Abstract**

The present invention relates to a method for accessing an electronic election system for online voting, comprising the steps of: receiving (101) an electronic request (2) from an electronic terminal of a voter (1) for accessing an election (5, 6); sending (102) an electronic message (3) comprising an access code (4) to an electronic recipient associated to said voter (1); validating (103) the access to said election (5, 6) by requesting to input said access code (4) in said electronic terminal; receiving (104) through electronic communication means a voter's preference (7) on said election (5, 6) and a confirmation code (9) generated by an electronic device (8) available to said voter (1); confirming (105) the vote (10) for said election (5, 6) by further validating said confirmation code (9). The present invention further relates to an electronic election system for online voting, accessed through computer network means.

## Description

### DESCRIPTION

### Technical Field

The present invention relates to a method for accessing an electronic election system for online voting, in particular implemented in a social network structure, and adapted for online voting, for example in political elections.

The present invention also relates to an electronic election system for online voting, in particular implemented by a computer network.

### Background art

An election is a formal decision-making process, by which a population chooses an individual to hold public office. Elections are the usual mechanism by which modern representative democracy operates. Elections may fill offices in the legislature, executive and judiciary, and for regional and local government. Moreover, elections can be used in many other public, private and business organizations, from worker's unions to corporations to voluntary associations or clubs.

A representative democracy requires a procedure to govern nomination for a political office. In many cases, nomination for office is mediated to a pre-selection process, that is organized by political parties. This very same pre-selection process is usually carried out as an election, by a different pool of voters, usually enrolled in the political party interested.

Elections in their traditional form may present, on the other hand, various degrees of difficulties. For example, there might be a lack of open political debate, and the voters of the electorate can be insufficiently informed, or misinformed, before the actual vote.

Moreover, voters in the population might be not enough prompted to vote in the elections: this could be due to a lack of faith in the present political system, or to the unfeasibility or undesirability of actually going to the place of voting.

Moreover, elections are costly to organize, either in terms of money, time and human resources; while the process of organizing elections can be afforded by a country, or by a small private association within itself, it can become burdensome for several in-between entities, such as unions, corporations and political parties willing to pre-select candidates.

Although it is possible to carry out elections in which the physical presence of the voter at the polling station is not required, such as in voting-through-mail elections, the access of voters to said elections would be hard to control, verify and regulate.

### Summary of the invention

It is an object of the present invention to provide a method for accessing an electronic election system for online voting, so that a larger share of voters can participate in the elections, and is moreover prompted to participate in the political life by voting.

It is also an object of the present invention to provide a method for accessing an electronic election system for online voting that allows voters to participate, with a larger response and access to elections, so that the elected offices better represent the will of the population.

It is a further object of the present invention to provide a method for accessing an electronic election system for online voting that is secure, and that allows to collect reliable results from the elections, so that it can effectively be employed for political elections as well.

It is a further object of the present invention to provide a method for accessing an electronic election system for online voting wherein the anonymity of voters is preserved.

These and further objects of the present invention are achieved by a method for accessing an electronic election system for online voting, and by a relative electronic election system for online voting.

According to the invention, the method for accessing an electronic election system for online voting comprises the steps of: receiving an electronic request from an electronic terminal of a voter, for accessing an election; sending an electronic message comprising an access code to an electronic recipient associated to the voter; validating the access to the election by requesting to input the access code in the electronic terminal; receiving through electronic communication means a voter's preference on the election and a confirmation code generated by an electronic device available to the voter; confirming the vote for the election by further validating the confirmation code.

The present invention contributes to allowing a larger share of voters to participate in the elections, through an accessing method that is secure, reliable and easy to use, even at larger scales. Advantageously, the accessing method provides a convenient access to online voting for elections, so that voters are prompted to participate in the political life by expressing their vote. The accessing method according to the invention gives fair access to the elections to all voters, regardless of their location at the time of election, and regardless of their physical state, even while temporarily ill or if physically impaired.

Preferably, the confirmation code is based on time based one time password protocols, so that a more secure validation of vote can be advantageously achieved.

The access code is preferably sent to an electronic recipient such as an e-mail address or a telephone number, so that the voter can obtain the access code independently from the electronic terminal; advantageously the access code inputted by the voter is compared to the sent access code, to verify the identity of the voter, thus resulting in an improved security for accessing the election.

The preference of the voter is preferably encrypted after voting, and no reference concerning the identity of the voter is maintained together with the vote itself. Advantageously, these features contribute to preserving the anonymity of the voter. Preferably, only certain demographic information can be stored in anonymous form, for statistical purposes.

Preferably, the electronic device that generates the confirmation code is sent to the voter at a physical address, so that the voter can have the device available at the time of voting.

The method according to the invention is preferably carried out in a web page, and is directed to providing an electronic election system for online voting that is accessed through a computer network; this advantageously maximizes the access to the elections for the voters, wherever they may be.

### Brief description of the drawings

Further features and advantages of the present invention will become apparent in the detailed description of preferred non-exclusive embodiments, which are described as non-limiting examples with the help of the annexed drawings, wherein:

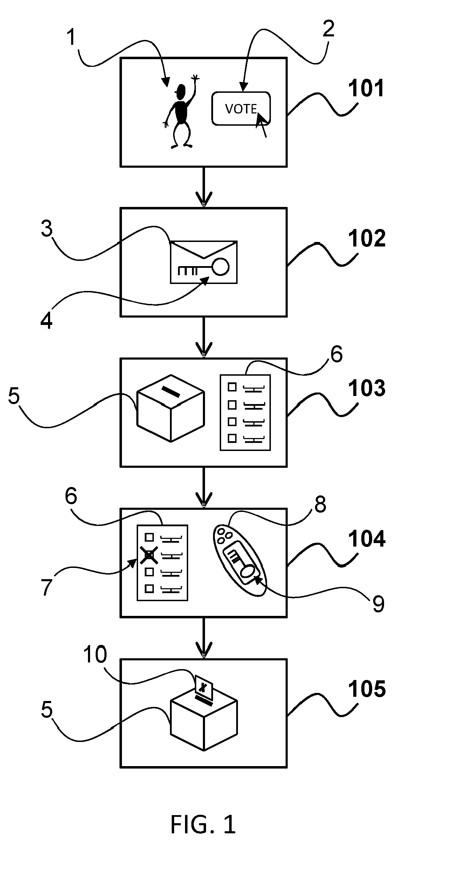

- Figure 1, schematically represents the method for online voting according to the present invention.

In general, the drawings may illustrate different aspects and embodiments of the present invention and, where appropriate, like elements or actions in different figures are indicated by the same reference numbers.

### Detailed description of embodiments

In a preferred embodiment, the electronic election system for online voting according to the present invention is accessed through an online voting platform.

Preferably, the online voting platform is embedded in a social-network-like structure, accessible through the Internet, that the voters can access conveniently from any location.

All people having the right to vote, according to the specific legislations or regulations, can register to the online voting platform. For example, a person having at least sixteen or eighteen years of age can register, by furnishing its personal data such as: Name, Surname, date and place of birth, residence, e-mail address and phone number.

By registering to the online voting platform, the voter obtains access to the electronic election system. Preferably, each registered voter has login and password credentials sent through a SMS-type message at the cellular phone number, or sent via e-mail to his/her address.

Preferably the voter can access further services on the online voting platform, such as an "online debate" platform wherein the voter can look at comments and information posted by candidates, political parties, and others, in a blog-like structure. As a result, the political debate is encouraged, and fair access to the elections is provided.

Moreover, the online voting platform can be integrated with other social networks, such as Facebook®, Google+®, Skype®, Twitter®, or others.

Each voter's account has money credit that can be recharged, with a prepaid-like systems, such as through credit or debit card, bank transfer, Paypal®, or other known systems. The voter's credit on the account can be used to access a specific election, and vote for the same: in fact, certain (although not all) elections may be subject to a fee, or to a liberal contribution, for example starting from 1,00 €.

In the online voting platform the voter can search for future and on-going elections, search for candidates or for past elections' results. The voter can enroll in a voter's association, such as a political party; in that case the voter can contribute to the party by paying an enrolment fee withheld from his/her prepaid account. Moreover, the voter can present himself as a candidate in certain types of elections, through the same online voting platform.

The voter can also access the online voting platform as an "independent" elector, without any affiliation or membership in any party.

Also political parties and associations can have access to the online voting platform, for publicly communicating with voters, but without access to voting in elections (that is restricted to voters only). The parties/unions can invite voters to vote for an election, in an exclusive manner (wherein only invited voters can vote, for example the voters being registered member of the same political party) or in an "open" manner (wherein voters can further invite, or wherein every voter can freely choose to vote).

Moreover, candidates can use the online voting platform to promote their political agenda, and to present themselves and their past experiences. Voters can subscribe to the profile of preferred candidates, to remain updated on future developments, in a social-network or blog-like structure. Such online voting platform potentially becomes a preferred communication tool between voters, candidates, and associations including political parties, that allows a better participation in the political life for all the involved population, and contribute in promoting political awareness.

A preferred embodiment of a method for accessing an electronic election system for online voting according to the present invention is schematically exemplified in Figure 1.

A voter 1 is registered to an online voting platform, that provides the access to the elections. The voter 1, within his/her account in the online voting platform, is prompted to a list of all open elections, for which he/she can vote, in a given time window. For example, the voter 1 can login in the online voting platform, and visualize all available elections, for the date and Country/place of his/her residence. If the voter 1 wants to vote for an election, he/she makes a request 101 to vote for an available election, for example by clicking on a button 2 of an electronic interface such as a web page of the online voting platform.

The request 101 is received electronically by the online voting system implementing the platform, from the electronic terminal used by the voter 1 that can be a computer, or a mobile phone, or even a dedicated terminal placed in a certain location.

The online voting platform's system receives the request 101, and sends at step 102 an electronic message 3 to the voter 1. The electronic message 3 is sent to an electronic recipient that is associated to voter 1 within a database, such as an e-mail address or a telephone number. The information concerning the electronic recipient of choice can be provided by the voter 1 himself/herself, upon registering to the online voting platform.

The sent electronic message 3, such as an email or an SMS message, comprises an access code 4. The access code can be an alphanumeric password, or a coded web link, or the like. In a preferred embodiment, the access code is sent upon payment of a fee from the voter's 1 prepaid account.

The voter 1 is then requested, within the online voting platform, to input the access code 4 he/she has received through the message 3. If the voter 1 inputs the correct access code 4, his/her identity is validated at step 103 and he/she is prompted to the election 5, wherein he/she can choose the candidate to vote. The online voting platform compares the inputted access code with the sent access code, and if a match is found, prompts to the voter 1 a list 6 of candidates for the accessed election 5. For example, the voter 1 inputs the access code 4 in a field of a web page.

Preferably, the access code 4 is sent upon payment of a fee from the voter 1, that is withheld from his/her account, so that the voter 1 gains access to the election 5. This contribution can be a flat predetermined fee, or a liberal contribution especially in case of pre-selection election for political parties. The voter 1 selects at step 104 the candidate of his/her choice within the list 6, and expresses the preference 7 for the chosen candidate. At the same time, the voter 1 uses a further electronic device 8 to generate a confirmation code 9, to be inputted together with the preference 7. The electronic device 8 is meant to be available to the voter 1, and only to the voter 1, representing a proof of identity.

The above information is then transmitted through electronic communication means, such as a computer network via cable of wireless, to the electronic election system.

For example, the device 8 can be an electronic portable device such as a "token", that has been previously sent to a physical address of residence that the voter 1 has provided upon registering to the online voting platform. Alternatively, the device 8 can be a different device, such as a computer running a dedicated program or application, available only to the voter 1 for example through known authentication means.

Preferably, the device 8 generates a confirmation code 9 based on a time-based algorithm generating one-time passwords. Therefore, the identity of the voter 1 can be further verified, to prevent misuse of the online voting system. The confirmation code 9 is validated at step 105 according to the same algorithm used for generation, applied according to reverse techniques, and using the knowledge of the time at which the preference 7 has been expressed, that is transmitted by the system. The vote 10 is therefore provided for the election 5, after having been accepted by the online voting system.

Preferably the vote 10 is encrypted, to increase security of the system and to avoid tempering with the online voting system.

It has to be remarked that the validation step 103 is directed to validating the identity of the voter 1, to establish whether or not he/she can access the election; differently the confirmation step 105 is directed to validating the identity of the voter so that the vote registered can be unambiguously linked to the voter's personal preference.

Preferably, the preference is expressed by clicking on the candidate's name and/or on a picture of a political party (if any); subsequently the requested confirmation code 9 is inputted by the voter 1, and the vote is sent by clicking on a "vote" button.

Preferably, after the vote 10 is confirmed, the voter 1 is prompted with a message such as "you have voted"; such indication shall preferably not disclose the preference of the voter 1, nor the preference itself shall be saved in a database with reference to the voter's identity.

Preferably, the preference of the voter 1 remains anonymous, i.e. is stored in a "ballot" database within the system, with no reference to the identity of the voter 1, as a basic principle of most elections. After the vote 10 is confirmed, the online voting systems stores in a database an information representing that the voter 1 has voted for the election 5. This prevents voter 1 from voting multiple times for the same election.

Also preferably, after vote 10 is confirmed, certain information concerning the voter 1 can be extracted for statistical purposes; such information may comprise, sex, age/range of age, place of residence of the voter 1. Such statistical information, depending on the case, can become publicly available or visible only to a party involved, such as a political party, or to voters who voted in the election.

Preferably, the voter 1 can access an election 5 even if he/she does not have a sufficient amount of money on his/her account at the time of voting: in this case, a negative balance for the account up to a predetermined amount of money (i.e. for two elections) can be allowed by the system.

In an alternative embodiment, the voter 1 expresses his/her preference by sending an SMS-type message to a phone number associated with the online voting platform; such SMS-type message comprises for example a code representing the candidate of choice, a blank space or special character(s), and the confirmation code 9. Alternatively, the message can further comprise a header such as "vote" or "vote for", followed by the candidate's code (or name), a blank space or special character(s), and the confirmation code 9. In this alternative embodiment, preferably, the voter's account may be automatically billed upon receiving the SMS-type message comprising the preference. Preferably, the candidate's code is issued by the online voting system, and is visible on the online platform for the voter's reference.

The present invention is directed also to an electronic election system for online voting, comprising computer network means through which the voters can access the elections according to the method above exemplified. The computer network means may comprise a plurality of computer connected through the Internet via cable or wireless means.

The computer network may also comprise a dedicate computer network, with private access points in predetermined locations, if so desired. For example, the electronic terminal for voting may be a dedicated "totem"-like terminal, provided for example with a touch-screen, and installed in a given location. The online voting through the totem-like electronic terminals can be in addition to the online voting as described above, through a personal terminal, such as a PC or a laptop with Internet connection. Such totem-like terminals could be installed in a polling place; for example these could be installed in a public or dedicated space within an organization, such as a political party. An inexperienced voter, willing to vote at the totem-like terminal, can further receive assistance concerning the voting procedure by delegates.

In general, while accessing the online voting system, the voter 1 can be prompted with instructions concerning how to vote, for example through a "help" button.

The method and system according to the invention, as merely exemplified in the present description with the implementing details herein given, are susceptible to a number of changes and variants apparent to the skilled in the art, that do not depart from the scope of the present invention as defined by the appended claims.

For example, the access to the electronic election systems for online voting can be provided through different electronic means, such as computers, laptops, tablets or smart-phones with dedicated applications, or "Apps".

For example the electronic codes such as the access code and the confirmation code can be alphanumeric codes, strictly numeric codes, various types of strings or even optical codes, such as bar-codes or picture codes, or the like.

## Claims

1. Method for accessing an electronic election system for online voting, comprising the following steps:
- receiving (101) an electronic request (2) from an electronic terminal of a voter (1) for accessing an election (5, 6);
- sending (102) an electronic message (3) comprising an access code (4) to an electronic recipient associated to said voter (1);
- validating (103) the access to said election (5, 6) by requesting to input said access code (4) in said electronic terminal;
- receiving (104) through electronic communication means a voter's preference (7) on said election (5, 6) and a confirmation code (9) generated by an electronic device (8) available to said voter (1);
- confirming (105) the vote (10) for said election (5, 6) by further validating said confirmation code (9).

2. Method according to claim 1, wherein said electronic device (8) generates a time-based one-time confirmation code (9), and said confirming (105) the vote comprises using information on the time of said preference (7).

3. Method according to claim 1 or 2, wherein said validation (103) comprises comparing said inputted access code (4) with said sent (102) access code (4).

4. Method according to any one of claims 1 to 3, wherein said electronic recipient is an e-mail address or a telephone number.

5. Method according to any one of claims 1 to 4, wherein said preference (7) is encrypted after said confirmation (105).

6. Method according to any one of claims 1 to 5, further comprising storing said vote (10) for said election in an anonymous form after said confirmation (105), without reference to the identity of said voter (1).

7. Method according to claim 6, further comprising storing in a database further information representing that said voter (1) has voted, so that said voter (1) cannot vote a second time for the same election (5, 6).

8. Method according to claim 6 or 7, further comprising extracting further demographic information such as sex, age, or residence of said voter, in anonymous form for statistical purposes.

9. Method according to any one of claims 1 to 8, further comprising registering to said electronic election system, wherein said voter (1) furnishes an e-mail address or a telephone number, and further furnishes a physical address.

10. Method according to claim 9, wherein said electronic device (8), such as a token, is physically sent to at said physical address upon said registering.

11. Method according to any one of claims 1 to 10, wherein said access code (4) is sent (102) to said electronic recipient upon payment of a fee from a prepaid account of said voter (1).

12. Method according to any one of claims 1 to 11, wherein said voter (1) is invited to said election (5, 6) by a third party, such as a political party or a union.

13. Method according to claim 12, wherein said election (5, 6) is unavailable to uninvited voters.

14. Method according to any one of claims 1 to 13, **characterized in that** said electronic election system comprises a web page.

15. Electronic election system for online voting, **characterized in that** it is accessed through computer network means with a method according to any one of claims 1 to 14.
